# EUROPEAN PATENT SPECIFICATION

(11) **EP 1 460 290 B1**
(45) Date of publication and mention of the grant of the patent: **05.09.2007**
(21) Application number: 01275104.6
(22) Date of filing: 25.12.2001
(51) Int. Cl.: F16C 11/06

(54) **BALL JOINT**
KUGELGELENK
JOINT SPHERIQUE

(43) Date of publication of application: 22.09.2004
(60) Divisional application: 06019337.2
(73) Proprietor: Musashi Seimitsu Kogyo Kabushiki Kaisha, Toyohashi-Shi, Aichi-Ken (JP)
(72) Inventor: KONDOH, Yasuhiro, c/o Musashi Seimitsu Kogyo K.K., Toyohashi-shi, Aichi 441-8560 (JP)
(74) Representative: Liesegang, Roland
(86) International application number: PCT/JP2001/011397
(87) International publication number: WO 2003/056194

(56) References cited:
- DE-A1- 4 445 251
- DE-A1- 10 250 147
- JP-A- 2000 283 145
- JP-A- 2002 031 124
- US-A- 3 967 907

## Description

### TECHNICAL FIELD

The present invention relates to a ball joint used in a suspension system and a steering system and the like of for example an automobile.

### BACKGROUND ART

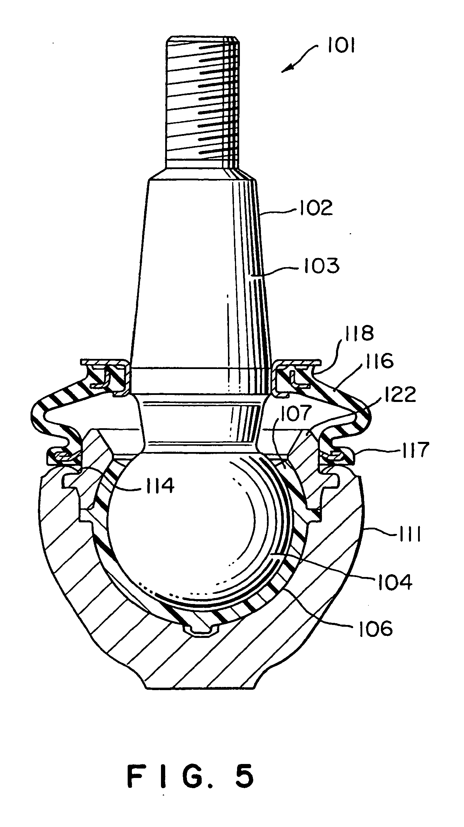

Conventionally, a ball joint has been often used as a joint in a suspension system and a steering system of an automobile. As shown in Fig. 5, the conventional ball joint includes: a ball stud 102 having a spherical ball part 104 and a shank part 103 extending from the spherical ball part 104; a bearing 106 made of a synthetic resin, cupping the spherical ball part 104 of the ball stud 102 in such a manner that the spherical ball part 104 is able to turn and rock therein, and having a bearing open part 107 in one end; a substantially cup-shaped housing 111 holding the bearing 106 therein and having a housing open part 114 through which the shank part 103 of the ball stud 102 projects; an annular retaining ring 122 fitted on an inner circumference of the housing open part 114 of the housing 111; and an elastic rubber boot 116 having a boot small open part 118 fitted on an outer circumference of the shank part 103 of the ball stud 102, and a boot large open part 117 fitted on an outer circumference of the retaining ring 122.

A ball joint similar to the one shown in Fig. 5 is disclosed in DE 44 45 251 Al. The ball joint shown in this document differs from the one of Fig. 5 in that the bearing is not cupping the spherical ball part but the bearing is ring-shaped, basically adapted to the retaining ring surrounding the bearing.

Recently, bad effects that the automobile produces on environment have been considered as a problem. Then, attempts to improve energy-efficiency of the automobile have been made more busily. Thus, request for weight saving of automobile parts has become strong. In the above ball joint 101, a soft and lightweight metal material, for example aluminum, has used for the housing 111 more often.

Using the boll joint 101 including the housing 111 made of aluminum surely results in weight saving. However, aluminum is lower in strength compared with steel. Thus, when the housing 111 of the ball joint 101 is made of aluminum, a load from the ball stud 102 may deform the housing 111 so that some looseness (backlash) may be generated at the ball stud 102. Thus, in order to prevent the looseness of the ball stud 102, it can be thought effective to increase the thickness of the housing 111. However, if the thickness of the housing 111 is increased to enhance strength thereof, the volume of the housing is also increased so that the weight saving of the ball joint is not achieved sufficiently.

### DISCLOSURE OF THE INVENTION

Accordingly, it is an object of the present invention to solve the aforesaid problems and to provide a ball joint that is lightweight and strong and that can inhibit generation of looseness.

The present invention provides a ball joint according to claim 1.

This invention is a ball joint comprising: a ball stud having a spherical ball part and a shank part extending from the spherical ball part; a bearing cupping the spherical ball part of the ball stud; and a housing holding the bearing therein; wherein the housing has an outer cup consisting of a soft and lightweight metal material and an inner cup consisting of a hard metal material and arranged on a side of an inner circumference of the outer cup.

According to the invention, a main load from the ball stud is received by the inner cup made of the hard metal material. Thus, a load received by the outer cup made of the soft and lightweight metal material can be reduced. Thus, the housing can be lightweight but strong, so that generation of looseness of the ball stud caused by deformation of the housing can be prevented.

Preferably, the outer cup has an inner-circumference butting surface formed in an inner-circumference surface thereof, the inner-circumference butting surface being substantially perpendicular to an axis of the shank part, and the inner cup has an outer-circumference butting surface formed in an outer-circumference surface thereof, the outer-circumference butting surface butting against the inner-circumference butting surface.

In the case, a load in the axial direction can be received by the inner-circumference butting surface and the outer-circumference butting surface. Thus, the load capacity in the axial direction can be set higher.

In addition, preferably, the inner cup is press-fitted in the outer cup.

Then, preferably, a gap is formed between a bottom part of the inner-circumference surface of the outer cup and a bottom part of the outer-circumference surface of the inner cup.

In the case, a hermetic space formed between the outer cup and the inner cup is expanded, and finally air can be hermetically introduced into the space. Thus, a repulsion force of the air at a press-fitting of the inner cup can be reduced, so that the inner cup can be more surely arranged at a predetermined position.

In addition, preferably, a curvature of the inner-circumference curved surface of the outer cup and a curvature of the outer-circumference curved surface of the inner cup are different in such a manner that a run off is formed between both the curved surfaces.

In the case, dimensional change of the housing in a direction perpendicular to the axial direction, at a press-fitting, can be inhibited. In particular, on the side of inner bottom part, there is little effect on the spherical ball part of the ball stud. Thus, a desired torque for turning and/or rocking can be obtained. On the side of a housing open part, if a retaining ring is provided, there may be less effect on the spherical ball part of the ball stud.

### BRIEF DESCRIPTION OF THE DRAWINGS

Fig. 1 is a partly sectional front elevation of a ball joint in an embodiment according to the present invention;
Fig. 2 is a sectional front elevation of assistance in explaining a first stage of work for assembling the ball joint shown in Fig. 1;
Fig. 3 is a sectional front elevation of assistance in explaining a second stage of work for assembling the ball joint shown in Fig. 1;
Fig. 4 is a partially sectional front elevation of a subassembly of the ball joint shown in Fig. 1; and
Fig. 5 is a partially sectional front elevation of a conventional ball joint.

### BEST MODE FOR CARRYING OUT THE INVENTION

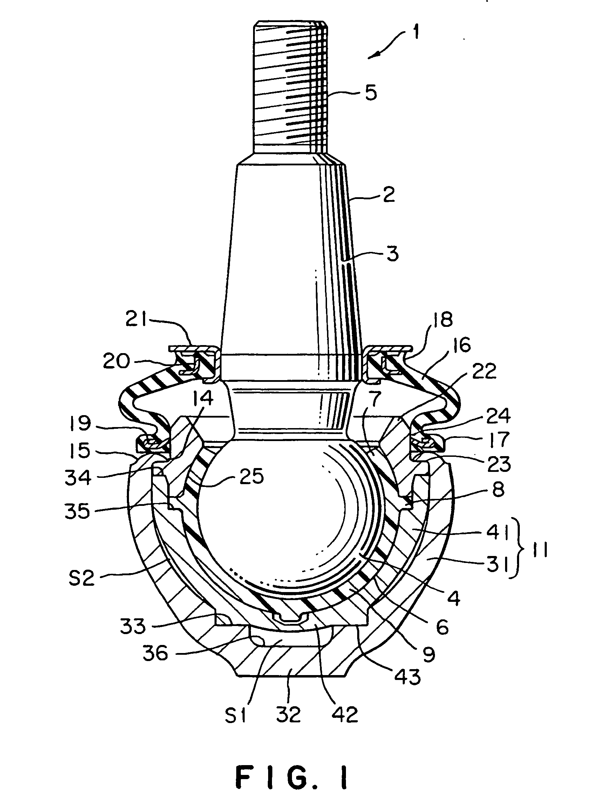

A preferred embodiment of the present invention will be described hereinafter with reference to Figs. 1 to 4.

Fig. 1 shows a ball joint 1 in an embodiment according to the present invention. The ball joint 1 includes a ball stud 2 having a shank part 3 with a thread 5 on one end thereof and a spherical ball part 4 extending from the other end of the shank part 3. A bearing 6 cups the spherical ball part 4 of the ball stud 2 in such a manner that the spherical ball part 4 is able to rock and turn therein. The bearing 6 has a bearing open part 7 in one end thereof to allow the spherical ball part 4 and the shank part 3 to rock. The bearing 6 is cupped (housed) in a housing 11. A housing open part 14 is formed in one end of the housing 11 corresponding to the bearing open part 7.

The housing 11 has an outer cup 31 made of a soft light metal, such as aluminum. In addition, the housing 11 also has an inner cup 41 made of a hard metal, such as a steel. The inner cup 41 is fitted in the outer cup 31 to enhance the strength of the housing 11.

The outer cup 31 has a holding part 15 to be bent toward the axis of the outer cup 31 in an end part on the side of the housing open part 14, and a closed outer bottom part 32 on the other side. A concave air space 36 is formed in an inner surface of the outer bottom part 32. An inner-circumference butting surface 33 extends substantially perpendicularly to the axis of the shank part 3 from an edge of the air space 36.

The inner cup 41 has a receiving end part 34 on the side of the housing open part 14, and a closed inner bottom part 42 on the other side. An outer-circumference butting surface 43 to butt against the inner-circumference butting surface 33 of the outer cup 31 is formed on the outer-circumference side of the inner bottom part 42 so as to extend substantially perpendicularly to the axis of the shank part 3.

When the inner cup 41 is fitted in the outer cup 31, the outer-circumference butting surface 43 of the inner cup 41 butts against (is seated on) the inner-circumference butting surface 33 of the outer cup 31. In addition, in that state, a gap S1 is formed between the air space 36 of the outer cup 31 and the inner bottom part 42 of the inner cup 41. In addition, the curvature of the inside surface of the outer cup 31 and the curvature of the outside surface of the inner cup 41 are not the same. Thus, a run off S2 (space) is adapted to be formed between the inside surface of the outer cup 31 and the outside surface of the inner cup 41.

In addition, in the embodiment, a step 35 is formed in the inner-circumference surface of the inner cup 41 at a portion near the receiving end part 34 of the inner cup 41. A flange 8 formed on the outer-circumference surface of the bearing 6 is seated on the step 35. A flange 23 formed in the outer-circumference surface of an annular retaining ring 22 fitted in the housing open part 14 is seated on the receiving end part 34.

The retaining ring 22 has an inner curved surface 25 with a curvature equal to that of the outer surface at a portion near the bearing open part 7 of the bearing 6. The retaining ring 22 has a circumferential wall 24 axially extending on the upper and the lower side of the flange 23. An elastic rubber boot 16 is fitted on the circumferential wall 24. More concretely, a large open part 17 internally provided with a reinforcing ring 19 of the rubber boot 16 is put on and fastened to the circumferential wall 24 of the retaining ring 22, and a small open part 18 internally provided with a reinforcing ring 20 and covered with a ferrule 21 having an L-shaped cross section is fastened to the shank part 3 of the ball stud 2.

A method of assembling 'the ball joint 1 will be described.

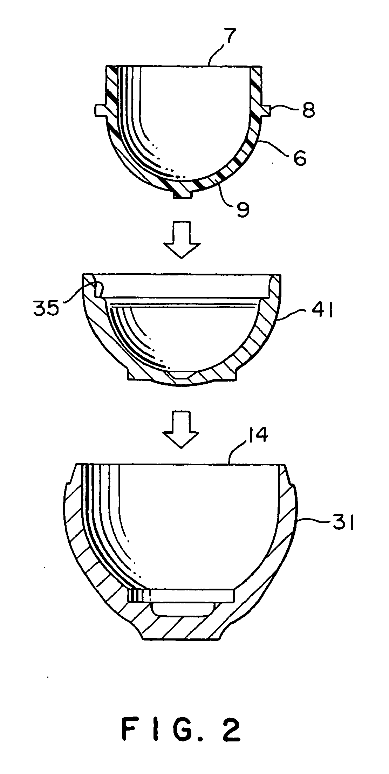

Referring to Fig. 2, the inner cup 41 is press-fitted into the outer cup 31. That is, the inner diameter of the open part of the outer cup 31 before the press-fitting is formed to be a little smaller than an opposite-ends length (outer diameter) of the inner cup 41. At the press-fitting, an end part of the inner cup 41 on the side of the housing open part 14 is pressed into an end part of the outer cup 31 on the side of the housing open part 14. The press-fitting operation can be relatively easily conducted because air can move into the gap S1 and the run off S2.

Then, the bearing 6 is inserted through the housing open part 14 of the housing 11, which has been formed by combining the outer cup 31 and the inner cup 41, into the housing 11. Preferably, a part near the bearing open part 7 of the bearing 6 is extended parallel to the axis of the housing 11, as shown in Fig. 2. The curved bottom part 9 of the bearing 6 inserted in the housing 11 is seated on the inner surface of the housing 11, and the flange 8 of the bearing 6 is seated on the step 35 of the housing 11.

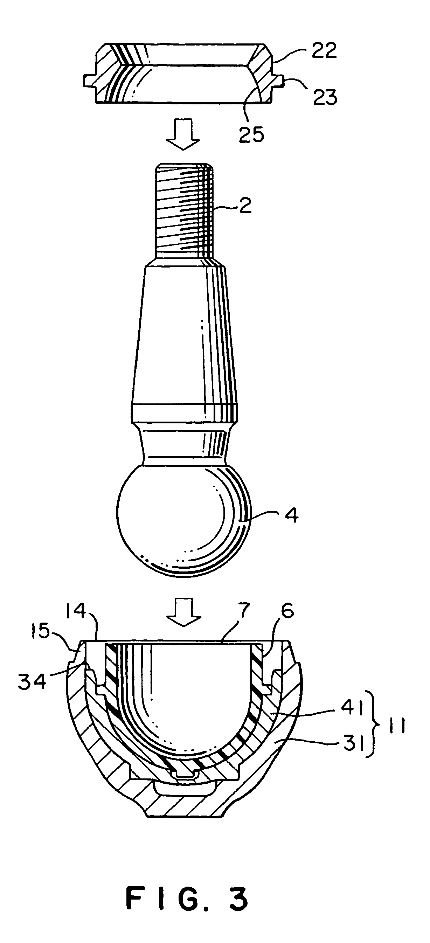

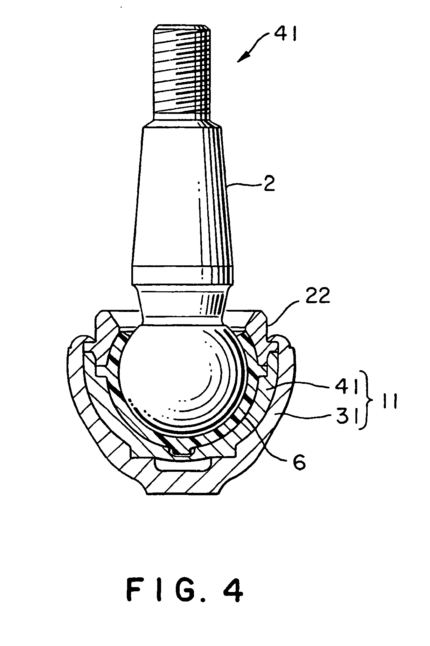

Then, as shown in Fig. 3, the spherical ball part 4 of the ball stud 2 is inserted through the bearing open part 7 in the bearing 6. Subsequently, the retaining ring 22 is inserted in the housing open part 14 of the housing 11, and the brim part near the bearing open part 7 of the bearing 6 is bent radially inward so as to conform to the curved inner surface 25 of the retaining ring 22. The flange 23 of the retaining ring 22 is seated on the receiving end part 34 of the housing 11. Then, the holding part 15 of the housing 11 is bent by pressing (caulked) to complete a subassembly 41 as shown in Fig. 4.

Lastly, the large open part 17 of the boot 16 is fitted on the circumferential wall 24 of the retaining ring 22, and the small open part 18 of the boot 16 is firmly fitted on the outer circumferential surface of the shank part 3 of the ball stud 2, so as to complete the ball joint 1 shown in Fig. 1.

In the above ball joint, the housing 11 consists of: the outer cup 31 consisting of a soft and lightweight metal material; and the inner cup 41 consisting of a hard metal material and arranged on the side of the inner circumference of the outer cup 31. Thus, a main load from the ball stud 2 can be sufficiently received by the inner cup 41 made of the hard metal material, so that a load received by the outer cup 31 made of the soft and lightweight metal material can be reduced. In addition, the outer cup 31 made of the soft and lightweight metal material can contribute to a weight saving of the housing 11.

In addition, in the embodiment, the inner-circumference butting surface 33 is formed in the inner-circumference surface of the outer cup 31, substantially perpendicularly to the axis, and the outer-circumference butting surface 43 is formed in the outer-circumference surface of the inner cup 41, the outer-circumference butting surface 43 butting against the inner-circumference butting surface 33. Thus, a load in the axial direction can be effectively received by the inner-circumference butting surface 33 and the outer-circumference butting surface 43.

In addition, in the embodiment, the gap S1 is formed between the air space 36 of the outer cup 31 and the inner bottom part 42 of the inner cup 41. Thus, a repulsion force of the air at the press-fitting of the inner cup 41 can be reduced, so that the inner cup 41 can be more surely arranged at a predetermined position.

In addition, in the embodiment, the run off S2 is formed between the inner-circumference curved surface of the outer cup 31 and the outer-circumference curved surface of the inner cup 41. Thus, dimensional change of the housing in a direction perpendicular to the axial direction, at the press-fitting, can be inhibited. In particular, on the side of inner bottom part, there is little effect on the spherical ball part 4 of the ball stud 2. Thus, the ball stud 2 can obtain a predetermined torque for turning and/or rocking. On the side of the housing open part 14, since the retaining ring 22 is provided, the dimensional change of the housing in a direction perpendicular to the axial direction has less effect on the spherical ball part 4 of the ball stud 2.

## Claims (Claims for the following Contracting State(s): DE)

1. A ball joint comprising:
a ball stud (2) having a spherical ball part (4) and a shank part (3) extending from the spherical ball part;
a bearing (6) cupping the spherical ball part (4) of the ball stud (2); and
a housing (11) holding the bearing (6) therein;
wherein the housing (11) has
an outer cup (31) consisting of a soft and lightweight metal material; and
an inner cup (41) consisting of a hard metal material and having a closed inner bottom part (42) arranged on a side of an inner circumference of the outer cup (31),
wherein radius of curvature of the inner-circumference curved surface of the outer cup (31) is smaller than radius of curvature of the outer-circumference curved surface of the inner cup (41) so that a run off(S2) is formed between both the curved surfaces.

2. A ball joint according to claim 1, wherein
the outer cup (31) has an inner-circumference butting surface (33) formed in an inner-circumference surface thereof, the inner-circumference butting surface (33) being substantially perpendicular to an axis of the shank part (3), and
the inner cup (41) has an outer-circumference butting surface (43) formed in an outer-circumference surface thereof, the outer-circumference butting surface butting against the inner-circumference butting surface (33).

3. A ball joint according to claim 1, wherein
the inner cup (41) is press-fitted in the outer cup (31).

4. A ball joint according to claim 3, wherein
a gap (S1) is formed between a bottom part (32) of the inner-circumference surface of the outer cup (31) and a bottom part (42) of the outer-circumference surface of the inner cup (41).

## Claims (Claims for the following Contracting State(s): GB, FR)

1. A ball joint comprising:
a ball stud (2) having a spherical ball part (4) and a shank part (3) extending from the spherical ball part;
a bearing (6) cupping the spherical ball part (4) of the ball stud (2); and
a housing (11) holding the bearing (6) therein;
wherein the housing (11) has
an outer cup (31) consisting of a soft and lightweight metal material; and
an inner cup (41) consisting of a hard metal material and having a closed inner bottom part (42) arranged on a side of an inner circumference of the outer cup (31).

2. A ball joint according to claim 1, wherein
the outer cup (31) has an inner-circumference butting surface (33) formed in an inner-circumference surface thereof, the inner-circumference butting surface (33) being substantially perpendicular to an axis of the shank part (3), and
the inner cup (41) has an outer-circumference butting surface (43) formed in an outer-circumference surface thereof, the outer-circumference butting surface butting against the inner-circumference butting surface (33).

3. A ball joint according to claim 1, wherein
the inner cup (41) is press-fitted in the outer cup (31).

4. A ball joint according to claim 3, wherein
a gap (S1) is formed between a bottom part (32) of the inner-circumference surface of the outer cup (31) and a bottom part (42) of the outer-circumference surface of the inner cup (41).

5. A ball joint according to claim 3, wherein radius of curvature of the inner-circumference curved surface of the outer cup (31) is smaller than radius of curvature of the outer-circumference curved surface of the inner cup (41) so that a run off (S2) is formed between both the curved surfaces.

## Patentansprüche (Patentansprüche für folgende(n) Vertragsstaat(en): DE)

1. Kugelgelenk mit:
einem Kugelständer (2) mit einem kugelförmigen Kugelabschnitt (4) und einem Schaftabschnitt (3), der sich von dem kugelförmigen Kugelabschnitt erstreckt;
einem Lager (6), das den kugelförmigen Kugelabschnitt (4) des Kugelständers (2) umgreift; und
einem Gehäuse (11), welches das Lager (6) darin hält;
wobei das Gehäuse (11) folgende Merkmale aufweist:
ein äußerer Becher (31), der aus einem weichen Metallwerkstoff mit geringem Gewicht hergestellt ist; und
ein innerer Becher (41), der aus einem harten Metallwerkstoff hergestellt ist und einen geschlossenen inneren Bodenabschnitt (42) aufweist, der auf einer Innenumfangsseite des äußeren Bechers (31) angeordnet ist,
wobei der Krümmungsradius der gekrümmten Oberfläche des Innenumfangs des äußeren Bechers (31) kleiner ist als der Krümmungsradius der gekrümmten Oberfläche des Au-βenumfangs des inneren Bechers (41), so daß ein Ablauf (S2) zwischen den beiden gekrümmten Flächen gebildet ist.

2. Kugelgelenk nach Anspruch 1, wobei
der äußere Becher (31) eine Innenumfangs-Anlagefläche (33) aufweist, die in einer Innenumfangsfläche ausgebildet ist, wobei die Innenumfangs-Anlagefläche (33) im wesentlichen senkrecht zu einer Achse des Schaftabschnitts (3) ist, und
der innere Becher (41) eine Außenumfangs-Anlagefläche (43) aufweist, die in einer Au-βenumfangsfläche des inneren Bechers ausgebildet ist, wobei die Außenumfangs-Anlagefläche gegen die Innenumfangs-Anlagefläche (33) zu liegen kommt.

3. Kugelgelenk nach Anspruch 1, wobei
der innere Becher (41) im Preßsitz in den äußeren Becher (31) eingefügt ist.

4. Kugelgelenk nach Anspruch 3, wobei
ein Spalt (S1) zwischen einem Bodenabschnitt (32) der Innenumfangsfläche des äußeren Bechers (31) und einem Bodenabschnitt (42) der Außenumfangsfläche des inneren Bechers (41) ausgebildet ist.

## Patentansprüche (Patentansprüche für folgende(n) Vertragsstaat(en): GB, FR)

1. Kugelgelenk mit:
einem Kugelständer (2) mit einem kugelförmigen Kugelabschnitt (4) und einem Schaftabschnitt (3), der sich von dem kugelförmigen Kugelabschnitt erstreckt;
einem Lager (6), das den kugelförmigen Kugelabschnitt (4) des Kugelständers (2) umgreift; und
einem Gehäuse (11), welches das Lager (6) darin hält;
wobei das Gehäuse (11) folgende Merkmale aufweist:
ein äußerer Becher (31), der aus einem weichen Metallwerkstoff mit geringem Gewicht hergestellt ist; und
ein innerer Becher (41), der aus einem harten Metallwerkstoff hergestellt ist und einen geschlossenen inneren Bodenabschnitt (42) aufweist, der auf einer Innenumfangsseite des äußeren Bechers (31) angeordnet ist.

2. Kugelgelenk nach Anspruch 1, wobei
der äußere Becher (31) eine Innenumfangs-Anlagefläche (33) aufweist, die in einer Innenumfangsfläche ausgebildet ist, wobei die Innenumfangs-Anlagefläche (33) im wesentlichen senkrecht zu einer Achse des Schaftabschnitts (3) ist, und
der innere Becher (41) eine Außenumfangs-Anlagefläche (43) aufweist, die in einer Außenumfangsfläche des inneren Bechers ausgebildet ist, wobei die Außenumfangs-Anlagefläche gegen die Innenumfangs-Anlagefläche (33) zu liegen kommt.

3. Kugelgelenk nach Anspruch 1, wobei
der innere Becher (41) im Preßsitz in den äußeren Becher (31) eingefügt ist.

4. Kugelgelenk nach Anspruch 3, wobei
ein Spalt (S1) zwischen einem Bodenabschnitt (32) der Innenumfangsfläche des äußeren Bechers (31) und einem Bodenabschnitt (42) der Außenumfangsfläche des inneren Bechers (41) ausgebildet ist.

5. Kugelgelenk nach Anspruch 3, wobei
der Krümmungsradius der gekrümmten Oberfläche des Innenumfangs des äußeren Bechers (31) kleiner ist als der Krümmungsradius der gekrümmten Oberfläche des Außenumfangs des inneren Bechers (41), so daß ein Ablauf (S2) zwischen den beiden gekrümmten Flächen gebildet ist.

## Revendications (Revendications pour l'(les) Etat(s) contractant(s) suivant(s): DE)

1. Joint sphérique comprenant :
une rotule sphérique (2) présentant une partie à bille sphérique (4) et une tige (3) s'étendant depuis la partie à bille sphérique;
un support (6) prenant dans son creux la partie à bille sphérique (4) de la rotule sphérique (2) ; et
un logement (11) maintenant le support (6) à l'intérieur ;
dans lequel le logement (11) présente
une cuvette extérieure (31) consistant en un matériau métallique léger et souple ; et
une cuvette intérieure (41) consistant en un matériau métallique dur et présentant une partie inférieure interne fermée (42) agencée sur un côté d'une circonférence intérieure de la cuvette extérieure (31),
dans lequel le rayon de courbure de la surface incurvée de la circonférence intérieure de la cuvette extérieure (31) est inférieur au rayon de courbure de la surface incurvée de la circonférence extérieure de la cuvette intérieure (41) de sorte qu'une évacuation (S2) est formée entre les deux surfaces incurvées.

2. Joint sphérique selon la revendication 1, dans lequel
la cuvette extérieure (31) présente une surface aboutant la circonférence intérieure (33) formée dans une surface de la circonférence intérieure de celle-ci, la surface aboutant la circonférence intérieure (33) étant essentiellement perpendiculaire à un axe de la tige (3), et
la cuvette intérieure (41) présente une surface aboutant la circonférence extérieure (43) formée dans une surface de la circonférence extérieure de celle-ci, la surface aboutant la circonférence extérieure butant contre la surface aboutant la circonférence intérieure (33).

3. Joint sphérique selon la revendication 1, dans lequel
la cuvette intérieure (41) est ajustée par serrage dans la cuvette extérieure (31).

4. Joint sphérique selon la revendication 3, dans lequel
un espace (S1) est formé entre une partie inférieure (32) de la surface de la circonférence intérieure de la cuvette extérieure (31) et une partie inférieure (42) de la surface de la circonférence extérieure de la cuvette intérieure (41).

## Revendications (Revendications pour l'(les) Etat(s) contractant(s) suivant(s): GB, FR)

1. Joint sphérique comprenant :
une rotule sphérique (2) présentant une partie à bille sphérique (4) et une tige (3) s'étendant depuis la partie à bille sphérique ;
un support (6) prenant dans son creux la partie à bille sphérique (4) de la rotule sphérique (2) ; et
un logement (11) maintenant le support (6) à l'intérieur ;
dans lequel le logement (11) présente
une cuvette extérieure (31) consistant en un matériau métallique léger et souple ; et
une cuvette intérieure (41) consistant en un matériau métallique dur et présentant une partie inférieure interne fermée (42) agencée sur un côté d'une circonférence intérieure de la cuvette extérieure (31).

2. Joint sphérique selon la revendication 1, dans lequel
la cuvette extérieure (31) présente une surface aboutant la circonférence intérieure (33) formée dans une surface de la circonférence intérieure de celle-ci, la surface aboutant la circonférence intérieure (33) étant essentiellement perpendiculaire à un axe de la tige (3), et
la cuvette intérieure (41) présente une surface aboutant la circonférence extérieure (43) formée dans une surface de la circonférence extérieure de celle-ci, la surface aboutant la circonférence extérieure butant contre la surface aboutant la circonférence intérieure (33).

3. Joint sphérique selon la revendication 1, dans lequel
la cuvette intérieure (41) est ajustée par serrage dans la cuvette extérieure (31).

4. Joint sphérique selon la revendication 3, dans lequel
un espace (S1) est formé entre une partie inférieure (32) de la surface de la circonférence intérieure de la cuvette extérieure (31) et une partie inférieure (42) de la surface de la circonférence extérieure de la cuvette intérieure (41).

5. Joint sphérique selon la revendication 3, dans lequel
le rayon de courbure de la surface incurvée de la circonférence intérieure de la cuvette extérieure (31) est inférieur au rayon de courbure de la surface incurvée de la circonférence extérieure de la cuvette intérieure (41) de sorte qu'une évacuation (S2) est formée entre les deux surfaces incurvées.
